# EUROPEAN PATENT SPECIFICATION

(11) **EP 2 190 243 B1**
(45) Date of publication and mention of the grant of the patent: **16.11.2011**
(21) Application number: 09166061.3
(22) Date of filing: 21.07.2009
(51) Int. Cl.: H04W 48/04

(54) **Location Specific Network Access**
Standortspezifischer Netzwerkzugang
Accès au réseau spécifique à la localisation

(30) Priority: 21.07.2008 GB 0813312
(43) Date of publication of application: 26.05.2010
(73) Proprietor: Vodafone Group PLC, Newbury Berkshire RG14 2FN (GB)
(72) Inventor: Wong, Gavin, Newbury, Berkshire RG14 2FN (GB); Fox, David, Newbury, Berkshire RG14 2FN (GB); Frost, Tim, Newbury, Berkshire RG14 2FN (GB)
(74) Representative: Keston, David Arthur

(56) References cited:
- WO-A1-99/07167
- ES-T3- 2 271 143
- GB-A- 2 353 921

## Description

### Field of the Invention

The present invention relates to a system and method for controlling access to telecommunications networks from terminals having location specific subscriptions. The present invention is particularly applicable to a telecommunications network providing a Long Term Evolution (LTE) radio access network (RAN).

### Background

In currently deployed cellular networks there are typically two different radio access technologies (RATs): a second generation (2G) design following the GSM radio access standards and a third generation (3G) design following UMTS Terrestrial Radio Access Network (UTRAN) design. It is contemplated that in future a number of different RAT designs will proliferate: for instance, the long term evolution (LTE) of the UTRAN design (so-called E-UTRAN or "evolved" UTRAN) is expected to operate in parallel with existing 3G and 2G RATS.

In the proposed LTE mobile telecommunications network, each base station comprises an enhanced Node-B (eNB). The base stations are arranged in groups, and each group of base stations is controlled by a Mobility Management Entity (MME) and a User Plane Entity (UPE).

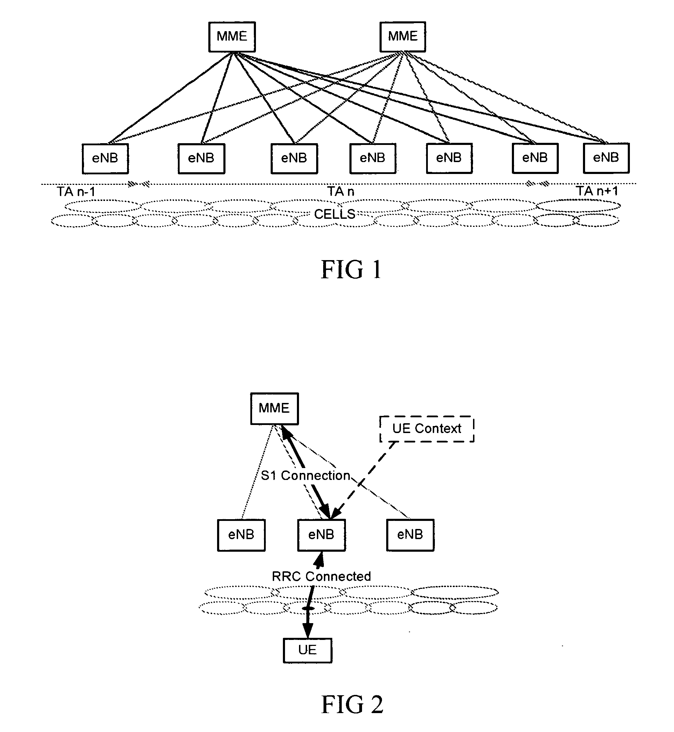

In current proposals, the LTE system has the ability to allow or disallow access of idle state user equipment (UEs) to the system based on the concept of the Tracking Area (TA). Cells are grouped into clusters assumed to be in the order of 100, with each cluster being given a TA Identity. A UE is either Accepted or Rejected into one or a collection of TAs by the Mobility Management Entity (MME) when the UE performs the TA Update procedure (see Fig 1). Conventionally, when the UE connects to an eNB it enters Radio Resource Control (RRC) Connected state, which requires the security procedures to be triggered between the UE and the RAN. Whilst the UE remains in RRC Connected state, the eNB is in control of the UE mobility. Whilst in RRC Connected state the eNB stores the UE context for that UE, which is generated from information provided from the UE and from the MME. When the UE moves to RRC Idle state the eNB discards the UE context information (see Fig 2).

Cellular telecommunications systems providing Long Term Evolution (LTE) radio access network (RAN) continue the trend for providing "on the move" connectivity that started in the GSM and UMTS networks. There are, of course, telecommunications systems that operate on a "fixed-line" basis (notably xDSL services). To some extent the mobile and fixed systems overlap as customer propositions, there is as a result a need to differentiate the offerings of the cellular telecommunications operators over those of the fixed systems and to take advantage of the natural flexibility of mobile solutions in establishing convenient customer propositions.

It is therefore an object of the invention to obviate or at least mitigate the aforementioned problems.

ES2271143 describes an approach of providing mobile terminals with different levels of service depending upon their movement, as defined by an allocated mobility class.

WO99/07167 describes an approach of offering spare network capacity to subscribers, where available, at a lower tariff but subject to a geographical restriction.

GB2353921 describes an arrangement for creating mobile-radio-free zones, to provide, for instance, an area free of radio interference.

In accordance with one aspect of the present invention, there is provided a method for establishing a terminal-specific service zone within a cellular telecommunications network, the cellular telecommunications network comprising a plurality of cells each served by a respective base station, the method comprising: for a given mobile terminal, generating a list of allowed cells, a subset of the allowed cells being service zone cells within which one or more predetermined services are available to the mobile terminal; transmitting a message including the allowed cell list and information identifying the service zone cells to each base station corresponding to cells in the allowed list; and scheduling radio resource for providing access to said predetermined services to the mobile terminal when the mobile terminal is determined to be connected to one of the service zone cells; and wherein the step of generating a list of allowed cells further comprises, for the given mobile terminal, further dividing the service zone into at least two subsets of cells, including a first subset having a first bit rate parameter value and a second subset having a second bit rate parameter value, the first bit rate parameter value being substantially greater than the second bit rate parameter value, thereby ensuring that a higher bit rate is provided to the mobile terminal in the first subset of service zone cells.

As a result, the operator can limit which cells any given terminal can use to access a service (for example web access, email services or peer-to-peer services). The operator can thus offer a "limited" mobility to a terminal user- allowing movement around a "home zone" that is potentially, considerably wider than the range of a WiFi access point yet: billing for usage in the home zone can then be differentiated from that outside the home zone.

As the message including the allowed cell list and information identifying the service zone cells is sent *only* to base stations corresponding to cells in the allowed list, the usage of paging can be reduced and the UEs will consequently save battery power (unnecessary changes in RRC connection can be avoided).

In consequence, the provision of service can be fine-tuned to reflect the distance a terminal if from its core home zone (i.e. in the first subset of service zone cells): the terminal user is provided with a better service (i.e. more or less Radio Resources) the closer they are to the central home zone cell(s).

In accordance with a further aspect of the present invention, there is provided a network entity for establishing a terminal-specific service zone within a cellular telecommunications network, the cellular telecommunications network comprising a plurality of cells each served by a respective base station, the network entity including: processing means for generating, for a given mobile terminal, a list of allowed cells, a subset of the allowed cells being service zone cells within which one or more predetermined services are available to the mobile terminal; transceiver means for transmitting a message including the allowed cell list and information identifying the service zone cells to each base station corresponding to cells in the allowed list; a scheduler for scheduling radio resource for providing access to said predetermined services to the mobile terminal when the mobile terminal is determined to be connected to one of the service zone cells; and wherein the processing means further divides, for the given mobile terminal, the service zone into at least two subsets of cells, including a first subset having a first bit rate parameter value and a second subset having a second bit rate parameter value, the first bit rate parameter value being substantially greater than the second bit rate parameter value, thereby ensuring that a higher bit rate is provided to the mobile terminal in the first subset of service zone cells.

The network entity may for example be a Mobility Management Entity (MME).

### Brief Description of the Drawings

The present invention will now be described in greater detail, with reference to the following drawings.
Figure 1 illustrates the known arrangement under which LTE allows or disallows access of idle state user equipment (UEs) to the system based on the Tracking Area (TA).
Figure 2 illustrates the conventional arrangement whereby UE context information is stored by an eNB while a UE is in Radio Resource Control (RRC) Connected state when it connects to the eNB.
Figure 3 illustrates behaviour when a UE is in the RRC connected state in and out of a Service Zone; and
Figure 4 illustrates as scheme in accordance with the invention whereby the eNB manipulates the Aggregated Maximum bit rate (AMBR) of the UE based on the serving cell's proximity to the Home zone.

### Detailed Description

To appreciate certain aspects of the invention it is first worth considering behaviour when a UE is in the RRC idle state.

In one embodiment of the invention, when the UE performs a TA Update, instead of allowing the MME to only provide a list of allowed TAs to the UE, the MME would provide a list of allowed cells or/and TAs. The UE would then need to take the Cell ID into account when determining whether access to the cell is allowed. If the UE is camped in idle state on a cell which is not in the list of allowed cells, then the UE would treat this cell as if it were barred.

If the UE receives a paging message on a cell outside of the list of allowed cells, the UE does not respond to the paging message. However, as discussed elsewhere in this document, unnecessary paging load should be minimised in the network.

In an extension of this embodiment, the UEs may be allowed to perform the Tracking Area Update procedures (both periodically and based on mobility) to allow the operator to understand the UE movement and whether a more suitable subscription for this user would be preferable.

In an alternative embodiment of the invention, the UE would perform the TA Update procedure and can either be Accepted or Rejected, and the MME can provided the UE with a list of TAs where it is allowed to access the network. Whilst the UE is in these Allowed TAs, the UE may be in RRC Connected state or the RRC Idle state. This Option purely relies on the RRC Connected State handling described in the next section to allow or restrict data flow within cells described by the Allowed TAs.

An important aspect of these embodiments is the need for appropriate paging load optimisation.

As the UE is only going to be given service in the Service-Zone, there is no benefit in transmitting the paging message outside this area. To avoid the MME having to understand the network topology (and thereby minimising the changes to the MME), the MME may be arranged to include, in the Paging message, the "Cell Information" which allows the eNB to determine the Service-zone for this UE. The MME would not need to understand this "Cell information" and would consequently continue (in the conventional manner) to send the Paging message to all eNBs that control cells in the TAs that have been allocated to this UE in the last TA Update message.

The eNBs upon receiving the Paging message, with the "Cell Information", would transmit the normal Paging message on the air interface of the cells which are identified by the "Cell Information". This also avoids the UE wasting its battery and resources in the eNB, by moving from RRC Idle to RRC connected state even though no data will be transmitted at its current location.

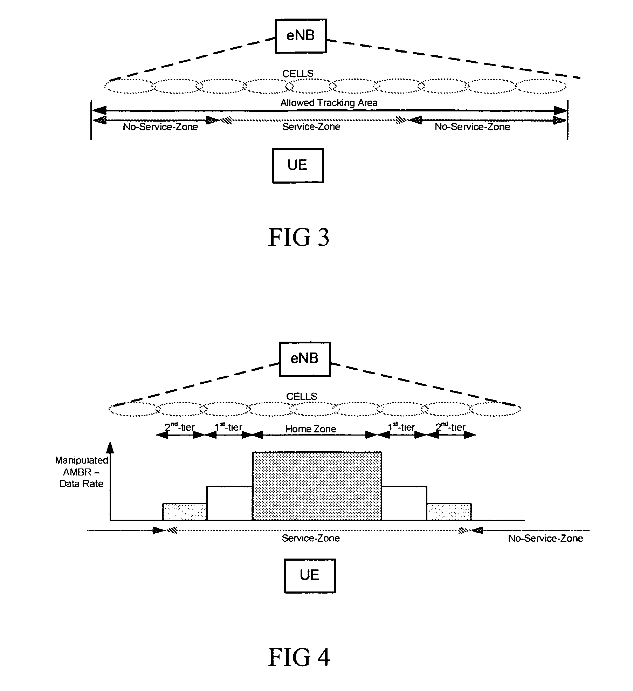

To appreciate certain other aspects of the invention it is also worth considering behaviour when a UE is in the RRC connected state. This is illustrated in Figure 3.

When the UE moves into RRC Connected state, the MME provides the "cell information" to the eNB as part of the UE context. The eNB typically uses this information to understand:
- The cells where the eNB is allowed to provide service to UE (Service-zone), and the cells where it is not (No-service-zone).

The "Cell Information" provided by the MME could be:
- A list of (Home zone) Cells; or
- A single cell ID for the UE to identify the Home zone cell of the UE. The eNB would then be configured for each cell ID the set of other cells that would be included in the Home zone cells. Indeed, with the deployment of an eNB with limited ranges (such as a femtocells - a consumer cellular network access point and picocells - office/high density cellular base station), this single cell ID could equate to a cell with a range on a par with that of a WiFi network.

When the UE moves into RRC Connected state inside the Service-zone the eNB schedules radio resource for the UE to allow data to/from the UE. However when the UE moves out of the Service-zone the eNB maintains the RRC Connection of the UE, however does not allocate radio resources for the terminal to send/receive user data.

When the UE moves to RRC connected state in the No-Service-zone, the eNB moves the UE into RRC connected state, but does not allocate any radio resource for the UE to transfer User Data, unless it moves into the Service-zone.

The eNB continues to maintain the RRC connection for this UE until it has moved out of all the TAs which overlay the cells in the Service-zone, then once outside of these TAs, the eNB releases the RRC Connection for the UE.

Conveniently, the eNB may provide an indication to the terminal that it is inside or outside of the Service-zone, when it enters RRC Connected State, or when transiting between the two zones.

In a further embodiment of the invention, the above scheme is enhanced to bring data rate closer to the optimal. The eNB to manipulate the Aggregated Maximum bit rate (AMBR) of the UE based on the "cell information" - such that the network provides the terminal with better service (i.e. more or less Radio Resources) the closer they are to the central Home zone cell(s). This is illustrated in Figure 4.
- Thus the terminal (UE) served by the central Home zone cell(s) might be provided with an AMBR of 2Mb/s.
- The first tier of neighbour cells the eNB would lower the AMBR for that UE, (e.g. to AMBR=1Mb/s);
- The second tier where the AMBR would again be lowered for that UE, (e.g. to AMBR=500kb/s);
- Outside these two tiers the AMBR would be set to zero.

In this embodiment, the eNB would consider the Home zone cells and the 1 st and 2nd tier neighbour cells as being in the Service-zone.

When the UE moves between the cells controlled by different eNBs within the Service-Zone, the new eNB is passed the "Cell Information" by the old eNB or the MME in the handover signalling.

The invention thus introduces functionality into the LTE system (and other cellular telecommunications systems) for allowing the operator to limit which cells the terminal can access through, on a cell by cell level.

## Claims

1. A method for establishing a terminal-specific service zone within a cellular telecommunications network, the cellular telecommunications network comprising a plurality of cells each served by a respective base station, the method comprising:
for a given mobile terminal, generating a list of allowed cells, a subset of the allowed cells being service zone cells within which one or more predetermined services are available to the mobile terminal; the method being **characterized by**:
transmitting a message including the allowed cell list and information identifying the service zone cells to each base station corresponding to cells in the allowed list; and
scheduling radio resource for providing access to said predetermined services to the mobile terminal when the mobile terminal is determined to be connected to one of the service zone cells; and
wherein the step of generating a list of allowed cells further comprises, for the given mobile terminal, further dividing the service zone into at least two subsets of cells, including a first subset having a first bit rate parameter value and a second subset having a second bit rate parameter value, the first bit rate parameter value being greater than the second bit rate parameter value, thereby ensuring that a higher bit rate is provided to the mobile terminal in the first subset of service zone cells.

2. The method of any one preceding claim, further comprising allowing the mobile terminal to connect to a newly entered cell without scheduling radio resource if the mobile terminal moves out of a service zone for which radio resource has been scheduled and if the newly entered cell is still an allowed cell.

3. The method of any one preceding claim further comprising scheduling radio resource for providing access to said predetermined services to the mobile terminal if the mobile terminal moves from an allowed cell that is outside the service zone and into one of the service zone cells.

4. The method of any one preceding claim further comprising if the mobile terminal moves to a cell that is not on the list of allowed cells, releasing any connection to radio resources.

5. The method of any one preceding claim further comprising providing an indication message to the mobile terminal if the mobile terminal has moved into an allowed cell or if the mobile terminal has moved between non-service and service zones.

6. A network entity for establishing a terminal-specific service zone within a cellular telecommunications network, the cellular telecommunications network comprising a plurality of cells each served by a respective base station, the network entity including:
processing means for generating, for a given mobile terminal, a list of allowed cells, a subset of the allowed cells being service zone cells within which one or more predetermined services are available to the mobile terminal; the network entity being **characterized by**:
transceiver means for transmitting a message including the allowed cell list and information identifying the service zone cells to each base station corresponding to cells in the allowed list;
a scheduler for scheduling radio resource for providing access to said predetermined services to the mobile terminal when the mobile terminal is determined to be connected to one of the service zone cells; and
wherein the processing means further divides, for the given mobile terminal, the service zone into at least two subsets of cells, including a first subset having a first bit rate parameter value and a second subset having a second bit rate parameter value, the first bit rate parameter value being greater than the second bit rate parameter value, thereby ensuring that a higher bit rate is provided to the mobile terminal in the first subset of service zone cells.

7. The network entity of claim 6, wherein the network entity permits the mobile terminal to connect to a newly entered cell without scheduling radio resource if the mobile terminal moves out of a service zone for which radio resource has been scheduled and if the newly entered cell is still an allowed cell.

8. The network entity of claim 6 or claim 7, wherein the scheduler schedules radio resource for providing access to said predetermined services to the mobile terminal if the mobile terminal moves from an allowed cell that is outside the service zone and into one of the service zone cells.

9. The network entity of any one of claims 6 to 8, wherein the scheduler releases any connection to radio resources if the mobile terminal moves to a cell that is not on the list of allowed cells.

10. The network entity of any one of claims 6 to 9, wherein the transceiver generates an indication message to the mobile terminal if the mobile terminal has moved into an allowed cell or if the mobile terminal has moved between non-service and service zones.

## Patentansprüche

1. Verfahren zum Aufbauen einer endgerätspezifischen Servicezone in einem Funktelekommunikationsnetz, wobei das Funktelekommunikationsnetz mehrere Zellen umfasst, die jeweils von einer jeweiligen Basisstation bedient werden, wobei das Verfahren Folgendes beinhaltet:
Erzeugen, für ein gegebenes mobiles Endgerät, einer Liste von zugelassenen Zellen, wobei eine Teilmenge der zugelassenen Zellen Servicezonenzellen sind, innerhalb derer dem mobilen Endgerät ein oder mehrere vorbestimmte Dienste zur Verfügung stehen, wobei das Verfahren **gekennzeichnet ist durch**:
Senden einer Nachricht, die die Liste der zugelassenen Zellen und Informationen beinhaltet, die jeder Basisstation die Servicezonenzellen identifizieren, die Zellen in der zugelassenen Liste entsprechen; und
Planen von Funkbetriebsmitteln, um dem mobilen Endgerät Zugang zu den genannten vorbestimmten Diensten zu geben, wenn das mobile Endgerät für eine Verbindung mit einer der Servicezonenzellen bestimmt ist; und
wobei der Schritt des Erzeugens einer Liste von zugelassenen Zellen, für das gegebene mobile Endgerät, ferner das Unterteilen der Servicezone in wenigstens zwei Teilmengen von Zellen beinhaltet, einschließlich einer ersten Teilmenge mit einem ersten Bitratenparameterwert und einer zweiten Teilmenge mit einem zweiten Bitratenparameterwert, wobei der erste Bitratenparameterwert größer ist als der zweite Bitratcnparameterwert, wodurch gewährleistet wird, dass dem mobilen Endgerät in der ersten Teilmenge von Servicezonenzellen eine höhere Bitrate bereitgestellt wird.

2. Verfahren nach dem vorherigen Anspruch, das es ferner zulässt, dass sich das mobile Endgerät zu einer neu betretenen Zelle ohne Planung von Funkbetriebsmitteln zuschaltet, wenn sich das mobile Endgerät aus einer Servicezone hinausbewegt, für die F'unkbetriebsmittel geplant waren, and wenn die neu betretene Zelle immer noch eine zugelassene Zelle ist.

3. Verfahren nach einem der vorherigen Ansprüche, das ferner die Planung von Funkbetriebsmitteln beinhaltet, um dem mobilen Endgerät Zugang zu den genannten vorbestimmten Diensten zu gewähren, wenn sich das mobile Endgerät von einer zugelassenen Zelle außerhalb der Servicezone in eine der Servicezonenzellen bewegt.

4. Verfahren nach einem der vorherigen Ansprüche, das ferner das Auflösen einer Verbindung zu Funkbetriebsmitteln beinhaltet, wenn sich das mobile Endgerät in eine Zelle bewegt, die nicht auf der Liste von zugelassenen Zellen steht.

5. Verfahren nach einem der vorherigen Ansprüche, das ferner das Senden einer Anzeigemeldung zu dem mobilen Endgerät beinhaltet, wenn sich das mobile Endgerät in eine zugelassene Zelle bewegt hat oder sich wenn das mobile Endgerät zwischen Nicht-Service- und Servicezonen bewegt hat.

6. Netzwerkentität zum Aufbauen einer endgerätspezifischen Servicezone in einem Funktelekommunikationsnetz, wobei das Funktelekommunikationsnetz mehrere Zellen beinhaltet, die jeweils von einer jeweiligen Basisstation bedient werden, wobei die Netzwerkentität Folgendes beinhaltet:
Verarbeitungsmittel zum Erzeugen, für ein gegebenes mobiles Endgerät, einer Liste von zugelassenen Zellen, wobei eine Teilmenge der zugelassenen Zellen Servicezonenzellen sind, innerhalb derer dem mobilen Endgerät eine oder mehrere vorbestimmte Dienste zur Verfügung stehen;
wobei die Netzwerkentität **gekennzeichnet ist durch**:
Sende-/Empfangsmittel zum Senden einer Meldung, die die Liste der zugelassenen Zellen und Informationen beinhaltet, die jeder Basisstation die Servicezonenzellen identifizieren, die Zellen in der zugelassenen Liste entsprechen;
einen Scheduler zum Planen von Funkbetriebsmitteln, um dem mobilen Endgerät Zugang zu den genannten vorbestimmten Diensten zu gewähren, wenn das mobile Endgerät für eine Verbindung mit einer der Servicezonenzellen bestimmt ist; und
wobei das Verarbeitungsmittel, für das gegebene mobile Endgerät, die Servicezone in wenigstens zwei Teilmengen von Zellen unterteilt, einschließlich einer ersten Teilmenge mit einem ersten Bitratenparameterwert und einer zweiten Teilmenge mit einem zweiten Bitratenparameterwert, wobei der erste Bitratenparameterwert größer ist als der zweite Biäatenparanleterwert, um **dadurch zu gewährleisten, dass** dem mobilen Endgerät in der ersten Teilmenge von Servicezonenzellen eine höhere Bitrate zur Verfügung gestellt wird.

7. Netzwerkentität nach Anspruch 6, wobei es die Netzwerkentität zulässt, dass sich das mobile Endgerät einer neu betretenen Zelle ohne Planung von Funkbetriebsmitteln zuschaltet, wenn sich das mobile Endgerät aus einer Servicezone bewegt hat, für die Betriebsmittel geplant waren, und wenn die neu betretene Zelle immer noch eine zugelassene Zelle ist.

8. Netzwerkentität nach Anspruch 6 oder Anspruch 7, wobei der Scheduler Funkbetriebsmittel plant, um dem mobilen Endgerät Zugang zu den genannten vorbestimmten Diensten zu gewähren, wenn sich das mobile Endgerät von einer zugelassenen Zelle außerhalb der Servicezone in eine der Servicezonenzellen bewegt.

9. Netzwerkentität nach einem der Ansprüche 6 bis 8, wobei der Scheduler eine Verbindung mit Funkbetriebsmitteln auflöst, wenn sich das mobile Endgerät in eine Zelle bewegt, die nicht auf der Liste von zugelassenen Zellen steht.

10. Netzwerkentität nach einem der Ansprüche 6 bis 9, wobei der Sender/Empfänger dem mobilen Endgerät eine Anzeigemeldung sendet, wenn sich das mobile Endgerät in eine zugelassene Zelle bewegt hat oder wenn sich das mobile Endgerät zwischen Nicht-Service- und Servicezonen bewegt hat.

## Revendications

1. Procédé destiné à établir une zone de service spécifique à un terminal au sein d'un réseau de télécommunications cellulaire, le réseau de télécommunications cellulaire comprenant une pluralité de cellules dont chacune est desservie par une station de base respective, le procédé comprenant les opérations consistant à :
pour un terminal mobile donné, générer une liste de cellules autorisées, un sous-ensemble des cellules autorisées étant des cellules de zone de service au sein desquelles un ou plusieurs services prédéterminés sont mis à la disposition du terminal mobile;
le procédé étant **caractérisé par** :
la transmission d'un message englobant la liste des cellules autorisées et des informations qui identifient les cellules de la zone de service vers chaque station de base correspondant aux cellules se trouvant dans la liste autorisée; et
la planification de ressources radio pour procurer au terminal mobile un accès auxdits services prédéterminés lorsqu'il a été déterminé que le terminal mobile est connecté à l'une des cellules de la zone de service; et
cas dans lequel l'étape de génération d'une liste de cellules autorisées comprend en outre, pour le terminal mobile donné, la division supplémentaire de la zone de service en au moins deux sous-ensembles de cellules, englobant un premier sous-ensemble avec une première valeur paramétrique de débit binaire et un deuxième sous-ensemble avec une deuxième valeur paramétrique de débit binaire, la première valeur paramétrique de débit binaire étant supérieure à la deuxième valeur paramétrique de débit binaire, ce qui garantit par conséquent qu'un débit binaire plus élevé est offert au terminal mobile dans le premier sous-ensemble de cellules de la zone de service.

2. Procédé selon l'une quelconque des revendications précédentes, comprenant en outre l'opération consistant à autoriser le terminal mobile à se connecter à une cellule dans laquelle il vient d'entrer sans planification de ressources radio si le terminal mobile sort d'une zone de service pour laquelle des ressources radio ont été planifiées et si la cellule dans laquelle il vient d'entrer est toujours une cellule autorisée.

3. Procédé selon l'une quelconque des revendications précédentes, comprenant en outre l'opération consistant à planifier des ressources radio pour procurer au terminal mobile un accès auxdits services prédéterminés si le terminal mobile se déplace depuis une cellule autorisée qui se trouve en dehors de la zone de service et se rend dans l'une des cellules de la zone de service.

4. Procédé selon l'une quelconque des revendications précédentes, comprenant en outre l'opération consistant à libérer toute connexion vers des ressources radio si le terminal mobile se déplace vers une cellule qui ne se trouve pas sur la liste des cellules autorisées.

5. Procédé selon l'une quelconque des revendications précédentes, comprenant en outre l'opération consistant à fournir au terminal mobile un message d'indication si le terminal mobile s'est déplacé pour se rendre dans une cellule autorisée ou si le terminal mobile s'est déplacé entre une zone de non service et une zone de service.

6. Entité de réseau destinée à établir une zone de service spécifique à un terminal au sein d'un réseau de télécommunications cellulaire, le réseau de télécommunications cellulaire comprenant une pluralité de cellules dont chacune est desservie par une station de base respective, l'entité de réseau comportant :
des moyens de traitement pour générer, pour un terminal mobile donné, une liste de cellules autorisées, un sous-ensemble des cellules autorisées étant des cellules de zone de service au sein desquelles un ou plusieurs services prédéterminés sont mis à la disposition du terminal mobile :
l'entité de réseau étant **caractérisée par** :
des moyens émetteur-récepteur pour transmettre un message englobant la liste des cellules autorisées et des informations qui identifient les cellules de la zone de service vers chaque station de base correspondant aux cellules se trouvant dans la liste autorisée ;
un ordonnanceur pour planifier des ressources radio pour procurer au terminal mobile un accès auxdits services prédéterminés lorsqu'il a été déterminé que le terminal mobile est connecté à l'une des cellules de la zone de service ; et
cas dans lequel les moyens de traitement divisent en outre, pour le terminal mobile donné, la zone de service en au moins deux sous-ensembles de cellules, englobant un premier sous-ensemble avec une première valeur paramétrique de débit binaire et un deuxième sous-ensemble avec une deuxième valeur paramétrique de débit binaire, la première valeur paramétrique de débit binaire étant supérieure à la deuxième valeur paramétrique de débit binaire, ce qui garantit par conséquent qu'un débit binaire plus élevé est offert au terminal mobile dans le premier sous-ensemble de cellules de la zone de service.

7. Entité de réseau selon la revendication 6, l'entité de réseau permettant au terminal mobile de se connecter à une cellule dans laquelle il vient d'entrer sans planification de ressources radio si le terminal mobile sort d'une zone de service pour laquelle des ressources radio ont été planifiées et si la cellule dans laquelle il vient d'entrer est toujours une cellule autorisée.

8. Entité de réseau selon la revendication 6 ou la revendication 7, l'ordonnanceur planifiant des ressources radio pour procurer au terminal mobile un accès auxdits services prédéterminés si le terminal mobile se déplace depuis une cellule autorisée qui se trouve en dehors de la zone de service et se rend dans l'une des cellules de la zone de service.

9. Entité de réseau selon l'une quelconque des revendications 6 à 8, l'ordonnanceur libérant toute connexion vers des ressources radio si le terminal mobile se déplace vers une cellule qui ne se trouve pas sur la liste des cellules autorisées.

10. Entité de réseau, selon l'une quelconque des revendications 6 à 9, l'émetteur-récepteur générant vers le terminal mobile un message d'indication si le terminal mobile s'est déplacé pour se rendre dans une cellule autorisée ou si le terminal mobile s'est déplacé entre une zone de non service et une zone de service.
